Europäisches Patentamt

European Patent Office

Office européen des brevets

(11) Publication number: **0 350 209**
**A2**

# EUROPEAN PATENT APPLICATION

(21) Application number: 89306623.3

(51) Int. Cl.4: **G06F 9/46**

(22) Date of filing: 29.06.89

(30) Priority: 06.07.88 US 215585

(43) Date of publication of application:
10.01.90 Bulletin 90/02

(84) Designated Contracting States:
DE FR GB

(71) Applicant: **NICOLET INSTRUMENT CORPORATION**
**5225-3 Verona Road P.O. Box 4451**
**Madison, WI 53711-4495(US)**

(72) Inventor: **Tromp, Marianne I**
**6918 Stratford Drive**
**Madison, WI 53719(US)**
Inventor: **Kisslinger, Jack**
**554 Hillcrest Drive**
**Verona, WI 53593(US)**

(74) Representative: **Williams, Trevor John et al**
**J.A. KEMP & CO. 14 South Square Gray's Inn**
**London WC1R 5EU(GB)**

(54) Real-time fourier transform spectrometry.

(57) An analytical instrument designed for analysis of large sets of data, such as the interferogram light pattern in a spectrometer, includes controlling processors which control the operation of coprocessors. The coprocessors are each sequentially loaded with data and the assigned series of tasks. The coprocessors are assigned tasks by assigning to the coprocessor a block address location in controlling processor memory space where the task has its data area. Thus the coprocessor is assigned to different logical addresses in memory space as different tasks are assigned to the data. The coprocessors also have the capability to execute microcode independent of the controlling processors. The instrument is thus capable of near real-time operation while performing intensive numerical analysis.

FIG. 1

# REAL-TIME FOURIER TRANSFORM SPECTROMETRY

Field of the Invention

The present invention relates to electronic instruments for high speed data collection, processing and analysis, in general, and relates, in particular, to a spectroscopic instrument for the analysis of a chemical mixture of time varying nature, the instrument operating on a substantially real-time basis so that a source of chemical emissions can be continuously monitored with the current data constantly available.

Background of the Invention

Several companies manufacture devices for the chemical analysis of samples known as Fourier transform spectrometers. Such spectrometers generally include a source of time-varying radiation, which may be infrared, microwave or other source, a chamber or other device in which the radiation interacts with a sample of known or unknown composition, either solid, liquid, gas or plasma, and then a detector responsive to the radiation which has passed through the chamber for detecting the radiation emitted from the interaction. The detected signal is usually digitized for subsequent processing by a computer. The object of such processing is to develop a spectral analysis that can be recognized by an operator as being associated with certain chemical substituents of the sample.

Processing raw optical data into a spectral analysis is conventionally done with the use of the Fourier transform algorithm. The Fourier transform converts time-domain functions, such as interferograms, into recognizable frequency-domain functions that are represented as spectra. It is frequency-domain functions that may be used in order to generate both qualitative and quantitative information concerning the chemical constituents found in the sample.

To take a time domain radiation source signal and convert that to a frequency-domain signal using a Fourier transform analysis requires substantial computation. For accuracy, many thousands of interferometer, or radiation responsive, data points must be collected and digitized to produce the time domain signal. Then a process known as "apodization" is typically needed to enhance the interferogram before the Fourier transform can be performed. The Fourier transform is commonly performed using an algorithm known as the fast Fourier transform algorithm. After such transformation, in order for useful information to be obtained about a particular source having a certain background of known constituency, it may often be necessary to subtract a background spectrum or to compare the calculated spectrum to a standard or known spectrum. It may also be necessary to do such subtractions to remove irregularities or biases introduced by either the instrument or environmental conditions. Of course, to be useful, the resultant data must be analyzed and displayed in some useful fashion.

As with many instruments, in creating a Fourier transform interferometer spectrometer, there are several design compromises which must be made. It is usually considered that a combination of both high resolution and wide bandwidth is desirable, but to accomplish both of these objectives it is necessary to increase the number of data points that must be collected and transformed. In order to obtain such a large number of data points, the sampling must therefore be extensive and the overall speed of the device is limited by the extensive computational analysis which must thereafter be performed on these data points. In general, many prior art interferometers have required as long as five to ten minutes to process and transform a single high resolution interferogram. While it has been possible to create faster instruments, in order to do so sacrifices must be made in resolution or bandwidth which severely limit the utility of such an instrument. As a result, it has been previously impossible to generate accurate instruments with large bandwidth which are able to produce substantially real-time output. The most keen restriction on such an instrument is largely due to the time delay in data collection and the extensive computer processing necessary to create high resolution interferograms.

Prior efforts to reduce computation time while maintaining bandwidth resolution have been unsatisfactory. While progress has been made in achieving faster computer operation and more efficient methodologies neither of these elements, or their combination, have so far enabled the high precision broadband interferometer capable of a significant resolution and a sample and computation time of, for example, one second. Such an instrument is highly desirable for the study of dynamically changing samples. For example, a useful application of such an instrument would be the analysis of exhaust gases from an automobile. Such exhaust gases can change rapidly in content as the automobile engine passes through various phases of operation. An instrument which is incapable of providing accurate spectra on a near real-time basis cannot provide an accurate measurement of the time varying content of the exhaust gas of the automobile.

One approach to the resolution of this problem would be to have multiple coprocessor units operating simultaneously. Such an approach requires sophisticated control among the coprocessors so that they can share suitable information. Such a system has an inherent complexity because of the need to transport large amounts of data through the system as the computation proceeds, and as different processors handle different portions of the computational analysis.

## Summary of the Invention

The present invention is summarized in that an instrument for analyzing the output of an interferometer includes at least one controlling multi-tasking processor for controlling the interferometer and taking data from the detector, and a plurality of coprocessors each operating under the control of the controlling processor and each including coprocessor memory, the controlling processor connected through an address generator to the memory of each coprocessor, the controlling processor causing the address generator in each coprocessor to be changed periodically so that the data in the coprocessor memory is sequentially switched between tasks.

The present invention is also summarized in that a method for an operating multiprocessor processing machine includes a plurality of coprocessors each loaded with a set of data for a series of steps of sequential analysis, and a central processor controlling the address assignment of each coprocessor such that each coprocessor is sequentially assigned to a series of tasks until a final result is accomplished.

It is an advantage of the present invention in that a spectrometer is enabled which can perform substantially real-time analysis of the operation of time-varying chemical mixtures.

It is another object of the present invention to provide a methodology for general processing instrumentation which allows the efficient utilization of multiple processors operating on common tasks.

Other objects, advantages, and features of the present invention will become apparent from the following specification when taken in conjunction with the accompanying drawings.

## Brief Description of the Drawings

Fig. 1 is a schematic diagram of an exhaust gas analyzer constructed in accordance with the present invention.

Fig. 2 is a schematic diagram of a coprocessor in the instrument of Fig. 1.

## Description of the Preferred Embodiment

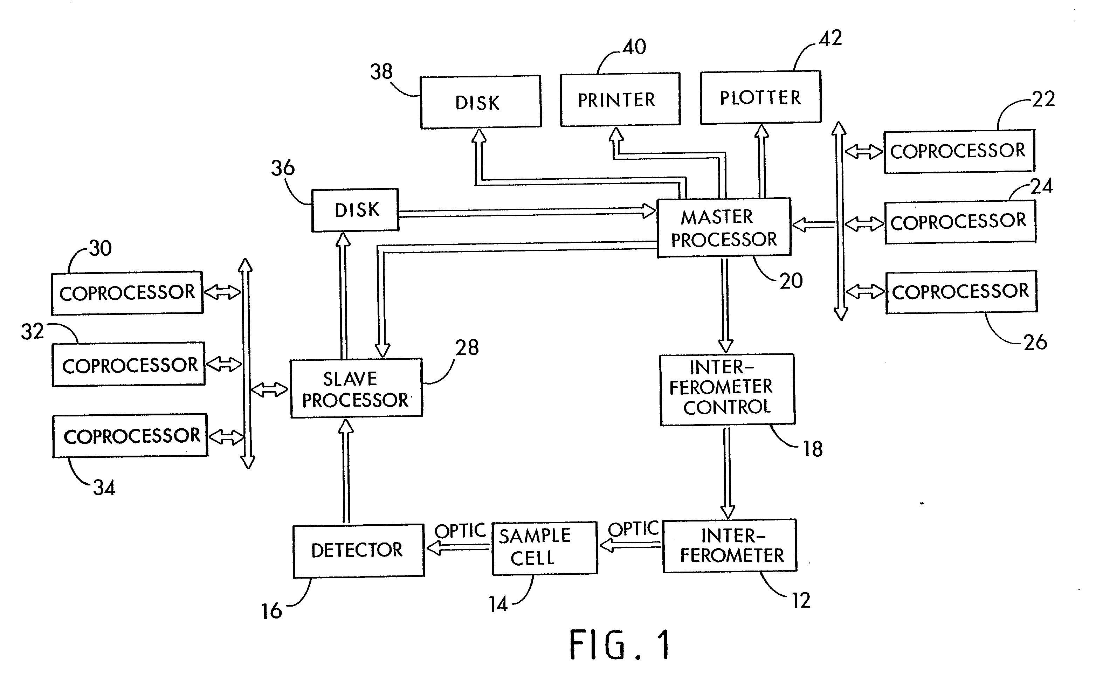

Generally illustrated in Fig. 1 is the data flow and control schematic for a near real-time spectrometer instrument. The optical path of the instrument is only schematically illustrated but is conventional. An interferometer 12 is utilized to generate a time-varying interference pattern of infrared light which is fed by an optical path to a sample cell 14. The sample cell 14, when used with a continuingly varying source of sample material, has suitable inputs and outputs (not shown) for the material to be sampled so that the material in the sample cell is constantly cycling through. The optical output of the interaction between the interferometer light pattern and the material in the sample cell is directed to a detector 16 suitable to the spectrum of the light source from the interferometer 12.

The interferometer 12 operates under the control of a digital interferometer control 18 which in turn is controlled by a master processor 20. The master processor 20 is a controlling digital central processing unit, such as a 1280, a 20-bit multi-tasking processor manufactured by the Nicolet Instrument Corporation, and also includes a bank of addressable memory. The master processor 20 has associated with it three coprocessors 22, 24 and 26 each of which is connected to both the data and address buses of the master processor 20. The master processor 20 is connected as a controlling processor to control the operation of the three coprocessors 22, 24, and 26.

3

The detector 16 has its output connected to a slave processor 28. The slave processor 28 is also a complete central processing unit, such as a second Nicolet 1280 processor, with attached addressable memory. The slave processor 28 is a "slave" in the sense that its software directs it to operate under the general operating instructions provided from the master processor 20 to ensure that one processor has control over overall system timing. The slave processor 28 has associated with it three coprocessors 30, 32 and 34 which are also connected to the data and address bus of the slave processor 28. The slave processor 28 is connected as a controlling processor to control the operation of the three coprocessors 30, 32, and 34. A disc storage medium 36 is connected so that it may be written to by the slave processor 28 and read from by the master processor 20. Also associated with the master processor 20 are suitable data output and presentation devices such as a disc storage device 38, a printer 40, and a plotter 42.

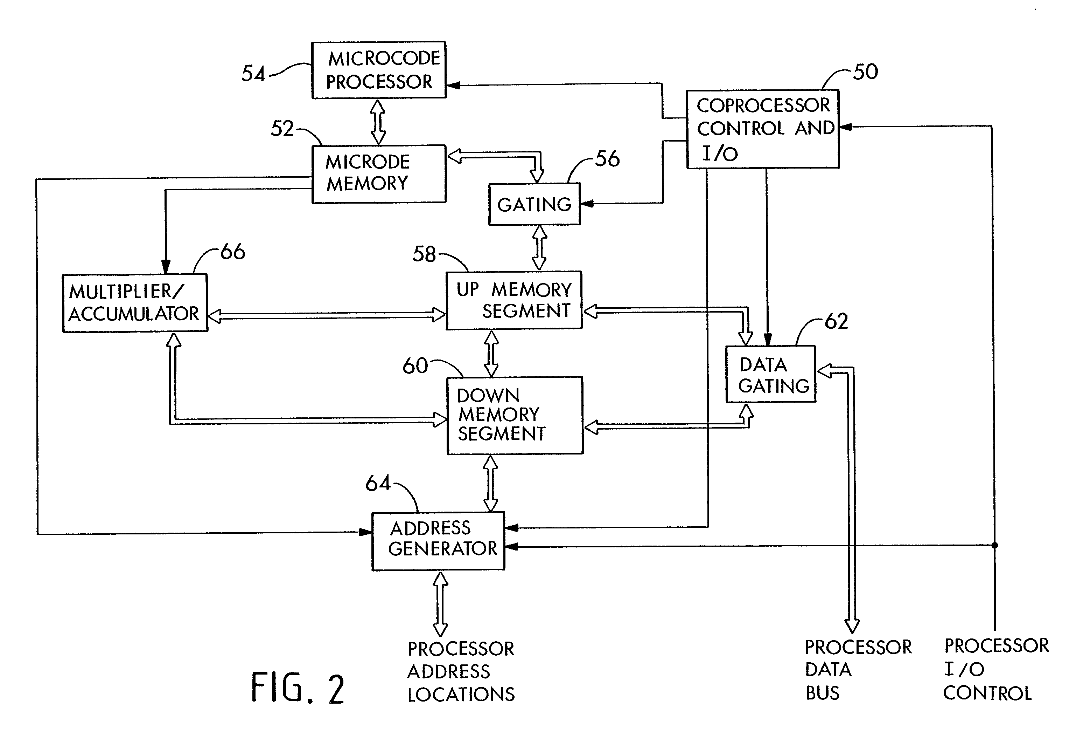

Illustrated in Fig. 2 is a schematic diagram of the internal circuity of one of the coprocessors 22, 24, 26, 30, 32, or 34 as viewed in Fig. 1. The six coprocessors are essentially internally identical. Each of the coprocessors includes a coprocessor control and input and output processor 50. The coprocessor control 50 receives an input from the controlling processor controlling the operation of the coprocessor, i.e. the master processor 20 or the slave processor 28. The coprocessor control 50 operates to control the operations of components of the coprocessor having a microcode program therein. These components include a microcode memory 52 in which a set of local processing instructions, or microcode, may be loaded and a microcode processor 54 which is capable of executing the microcode instructions. The microcode processor 54 is connected to access the microcode memory 52 and also through appropriate gating 56, which operates under control of the coprocessor control 50, to the coprocessor memory. The coprocessor main memory is broken into two segments, referred to as the "up" memory segment and as the "down" memory segment. In Fig. 2 the up memory segment is indicated at 58 and the down memory segment at 60. In this embodiment, these memory segments 58 and 60 are each blocks of 64K of memory. Data flow to and from the up and down memory segments 58 and 60 is through data gating 62 which connects the data buses from the up and down memory segments 58 and 60 to the data bus of the controlling processor. Similarly, the address bus from the controlling processor is connected to the up and down memory segments 58 and 60 through an address generator 64. The address generator 64 receives input both from the coprocessor control 50 and directly from the controlling processor itself. The address generator 64 controls the access of the controlling processor to the memory segments 58 and 60. In the embodiment of Figs. 1 and 2, which are based on a 20-bit address bus, the processor memory is organized into 64K blocks, and thus the addresses within any one block are addressed by the lower 16 bits of the address bus. The next three address bits specify which of eight blocks of 64K are being addressed (the highest bit not being used). Thus the address generator receives the three bits of the address bus and determines from those whether one of the memory segments 58 or 60 is being addressed by the processor. Thus the assignment of the coprocessor in memory space can be altered by altering the three bits recognized by the address generator 64. The coprocessor of Fig. 2 also includes a multiplier/accumulator 66 which is a multi-chip circuit particularly efficient for mathematically intense computations. The multiplier/accumulator receives its controlling input from the microcode memory 52 and is connected so that it can receive and transmit data to and from the up and down memory segments 58 and 60. An output from the microcode memory 52 also is connected to the address generator 64 to provide an input thereto.

In its broadest operation, the instrument for real time spectrometry as illustrated in Fig. 1 operates to provide a near real time analysis of the chemical constituencies of the gas in the sample cell 14. By "near real time" in this instance it is meant that the sampling and analysis is done on an on-going and continuous basis while the material to be measured passes through the sample cell 14. Such an on-going near real time analysis is particularly useful for the analysis of continuous processes, such as monitoring the exhaust gas from an automobile. By "near real time" as used in this sense, it is not meant that the analytical results can be obtained instantaneously. As will be seen from a detailed discussion of the mechanics of the operation of this device of Figs. 1 and 2, the results are, to some degree, time delayed by the analytical operations which must be conducted on the raw interferometer data. Nevertheless, the results are obtained continuously and may be monitored to determine the changes over time in the chemical constituents of the mixture in the sample cell.

What the design of the instrument of Fig. 1 is intended to do is to break down the total processing which must be done into a series of discrete operations or tasks. These tasks are done in sequence, beginning with the collection of the data and ending with output or display of the data in the format desired by the user. These tasks involve varying degrees of processor time. In order that the instrument may operate at near real time, the design of the instrument is such that various tasks are successively assigned to coprocessors which have a given set of data measurements. At the termination of a given task, the coprocessor and its associated data is then assigned a different task to operate on the same set of data. Thus, for the six coprocessors (22, 24, 26, 30, 32, and 34) in the instrument of Fig. 1, at any given instant in time as the instrument is continuously used, each of the coprocessors may be operating on a set of data from a different one of six sequential samplings of data from the detector 10. As the output of any given set of data is completed, a coprocessor is freed up and a new data sample set is taken. In this way, a continuous processing stream is maintained at all times, performing all of the necessary tasks on a queue of data samples which are proceeding through the instrument.

Thus, for example in the instrument of Fig. 1, it takes some finite time period to take a sample of the detected light variation over time, as sensed by the detector 16, to gain sufficient data for a high resolution Fourier transform analysis of the transmission pattern of the gas in the sample cell 14. For example, to obtain the desired resolution it may be required to have a sampling period of as long as one second. During the first one second time interval, the output of the detector 16, i.e. one set of data, would be loaded as an input into the appropriate up or down memory segment 58 or 60 of a designated first coprocessor. Assume, for purposes of this illustration, that the first input data set is loaded into coprocessor 30. To faciliate this loading, the coprocessor 30 has its address generator 64 loaded with an address value by the slave processor 28 so that the load data task as performed by the slave processor 28 loads input data into the area in address space currently occupied by the memory segments 58 and 60 of the first coprocessor. Then, during the one second input cycle, the slave processor 28 proceeds to load the data set from the output of the detector 16 into its memory segment at an input address which is currently occupied by the first coprocessor 30. Then, during the next one second sampling interval, the next coprocessor, for example the coprocessor 32, would be assigned the task of data input. During that second interval, the coprocessor 32 would have its address generator 64 loaded with an appropriate address value by the slave controlling processor 28 so that the memory in the coprocessor 32 is now assigned the area in address space where the task of load data is instructed to place the data. The assigned address value would be the same one previously assigned the memory of coprocessor 30. During the same time interval that the coprocessor 32 is assigned to the "input" task, the coprocessor 30, which has a full set of data stored in its memory, can proceed to be assigned to the next task, which is to do a fast Fourier transform of the interferometer data set to convert the signal from a time domain signal to a frequency domain signal. The performance of this task would be initiated by the controlling processor 28 loading into the address generator 64 of the coprocessor 30 a base address location assigning the data in the coprocessor 30 to the task of fast Fourier transform analysis. During the time period in which this task is being performed, the normal processing time-slice of the multi-tasking processor 28 is used as well as the fast Fourier transform microcode stored in its microcode memory 52 and the numerical computational capabilities of the multiplier accumulator 66 which has been built into the coprocessor 30. At the end of the second data collection period, a third interval would commence in which the coprocessor 34 would be assigned the task of data input collection and its address generator would be assigned as a base address location the location of the location in memory for the task of data input. During this third interval, the coprocessor 32 would be assigned the task of fast Fourier transform analysis of the data it collected during its data input phase. During this third interval, the coprocessor 30 would then be assigned the tasks of absorbance calculation and of writing its resulting output calculation to disk 36 for storage. To accomplish this objective, the slave processor 28 would assign the address generator 64 of the coprocessor 30 with the base address location of the task operating on the address space now assigned to the coprocessor 30 to subtract from the single-beam spectrum the background and store the absorbance spectrum and to write the contents of its appropriate up or down memory segment 58 or 60 into the disk 36. At the termination of the data collection cycle of the coprocessor 34, i.e. the end of the third interval, the cycle would repeat with the coprocessor 30 then being assigned the task of data input, the coprocessor 32 being pointed at a task of data output and the coprocessor 34 directed at the task of fast Fourier transform analysis of its data.

The corresponding three tasks for the coprocessors 22, 24, and 26, are a first task of reading the data from the disk 36, which is the equivalent of an input process. The second task is to perform a statistical analysis on the stored absorbance spectrum which was written on the disk 38 and this analysis includes an analysis for the quantitative amount of component gases contained in the sample cell 14, and may include a comparison of the absorbance spectrum with certain norms. The third task associated with these coprocessors is the output and recordation of the data on the appropriate output device such as the disk 38, the printer 40 or the plotter 42.

The structure and method of use of the coprocessors 22, 24, 26, 30, 32, and 34 in the instrument of Fig. 1 offers significant advantages in optimizing the rate of actual data analysis and flow through through the instrument of Fig. 1. Note that at each of the coprocessors 30, the data is not transferred from coprocessor to another coprocessor when a different task is to be performed. Instead, the data maintains residency at the same coprocessor, and the coprocessor itself is assigned a different task. The controlling processor 20 or 28 assigns the task to the coprocessor simply by changing the relative address in the address generator 64. In other words, certain blocks of the addressable memory of each of the processors 20 and 28 are loaded with the program instructions for each of the tasks which are to be assigned to the coprocessors. When the controlling processor 20 or 28 wishes to assign the appropriate coprocessor to a task, it loads a value into the address generator 64 contained in that coprocessor with the particular 64K block address recognized and addressed by the program of that task. The processor then executes the program tasks in a time sharing fashion. Each task, or program, always operates on data at the same location in addressable memory. Each time the task executes it operates on a different set of data not because the data has been loaded in or out but simply because the data has been "moved" in address space simply by changing the assignment in the address generator 64. In other words, the instrument sequentially performs a series of tasks on data not by moving the data sequentially from task to task, but by leaving the data in a given coprocessor and moving the coprocessor, in logical address space, from task to task. Because of the large volume of data necessary in an analysis of the type conducted by the instrument of Fig. 1, the overall processing of data moves faster when the data remains stationary than would be possible if each coprocessor was uniquely assigned to a given task and the data had to be transferred from coprocessor to coprocessor to be transferred from task to task.

An advantage of the coprocessor design and implementation of the instrument is that during any given task, the processor has access both to the task programming located in controlling processor memory, and also to implement the microcode located in the microcode memory 52 of the coprocessor. Thus the actual programming implementation can make use, as appropriate, of local microcode processing particularly to perform numerically intensive processing, independent of the controlling processor. The coprocessor can thus be instructed to perform a local microcode processing instruction independently to completion and then to inform the controlling processor, by setting a suitable flag or creating a suitable signal, to indicate completion and readiness for the next task.

An important component of the use of coprocessors in this fashion is a program which is associated with each of the controlling processors 20 and 28. This program is intended to handle the coprocessors by assigning them tasks as appropriate. For logical reasons then, the program is referred to as the coprocessor handler, abbreviated CPHNDLR. What follows below is a pseudo-code listing of the program CPHNDLR so that the overall concept of its operation and use can be more fully understood.

CPHNDLR PSEUDO-CODE

Coprocessor Table Definition

One table per coprocessor.

| [CP busy] | True if CP is in use, false if free |
|---|---|
| [CP go] | True if microcode is executing, false if not |
| [Task ID] | ID of task using the CP, or of the previous task if CP is free. Set to -1 if never used. |
| [CP Device Code] | Device code needed for sending instructions to the CP |
| [up][base address code] | Bit 4 is set if UP memory is active. The base address code indicates which of the memory blocks the CP occupies. A -1 indicates that the CP is not in memory space. |
| [last CMD] | Command last executed or attempted |
| [MCID address] | address of the Microcode ID block associated with the CP |
| [Copies of the CP register set] | |

Microcode Table Definition

| | |
|---|---|
| [microcode loaded] | -1 if no code is loaded. Otherwise, it contains the inode of the file containing the microcode. |
| [Initial CP register set] | Initial values for the CP registers, to be loaded each time before executing the microcode. |
| [Size] | The size code associated with the microcode. (Size would indicate the number of data points on which an FFT would be performed, for example) |
| [Pass] | The pass code associated with the microcode. (All the microcode written so far has only used a pass = 0) |

Program CPHNDLR

```
InitDone = False

error=0

#ofTasks=0

#of CPs=0

While (.not. InitDone) do
   read strings from standard IO
   if (option .eq. "I") then
      verify that we can find the CP
      verify that it acts like a CP
      if (it is a CP) then
       #ofCPs=#ofCPs+1
       Initialize Coprocessor Table for this CP
      else
       error="not a CP"
      endif
   elseif (option .eq. "M") then
```

```
if (#ofCPs .gt. 0) then
  open microcode file
  if (microcode exists) then
    load microcode information into all active CP's
    set up microcode table
    set microcode table address in the Coprocessor
      Tables for each active CP
  else
    error="file not found"
  endif
else
  error="no CPs initialized"
endif

elseif (option .eq. "S") then
  open executable program file
  if (file exists) then
    start file execution as a child task
    set task as the next sequential task for receiving
     a CP
    task#=#ofTasks
    #ofTasks=#ofTasks+1
    task ready(task#)=.false.
    task done(task#)=.false.
    set up a queued read from the child task
  else
    error="file not found"
  endif

elseif (option .eq. "Q") then
  InitDone=.true.

endif

if (error .ne. "none") then
  transfer error to standard IO
```

8

```
endif

endwhile

task#=0

while(#ofTasks .gt. 0) do
   if (CP interrupted) then
      Find interrupting CP#
      Update tables for the CP
      Handle pending requests for that CP


   else
      if (QueuedRead(task#) .eq. done) then
         get parameters for task request
         if (command .eq. Ready") then
            task ready(task#)=.true.
            if (all tasks are ready) then
               AllReady=.true.
            endif
            respond to task
            requeue read from task
         elseif (command .eq. "Done") then
            eliminate the task
            #ofTasks=#ofTasks - 1
         elseif (command .eq. "GoWait") then
            execute a GOCP command
            if (error .eq.0) then
               stack task# for when we get an interrupt
            endif
         elseif (command .eq. "Error") then
            transfer error message to standard IO
         respond to task
         requeue read from task
      else
         execute the standard CP command
         if (error .eq. "No free CPs" .and. command .eq.
```

9

```
               "Attach") then
                  stack the request
               elseif (error .eq. "Never will get a CP" .and.
                  command .eq. "Attach") then
               return "Never will get a CP" to requesting task#
               requeue task read
               elseif (error .eq. "CP busy" .and. command .eq.
                  "Deattach") then
               stack the request
               elseif (error .ne. "none") then
                  abort=.true.
                  send message to standard IO
                  disable all CPs
               else
                  respond to task
                  requeue task read
               endif
            endif
            check attach queue
            check deattach queue
         endif

      endif


      endwhile
```

Coprocessor Handler Commands

ATTACH(base address,upmem,CP#,Devcod):
Attach the appropriate coprocessor to the requesting task. Place the coprocessor at the base address specified and active the 64K memory block indicated by upmem. CPHNDLR returns the Cp# and device code to the calling routine. CPHNDLR determines which coprocessor to attach by finding a free coprocessor which has a task# one less than the task# of the requesting task. If the requesting task is task# 0, then a previous task number of -1 or #ofTasks-1 is considered valid. If CPHNDLR cannot find a valid CP, it checks to see if there might be one available in the future. One will be available in the future if the preceding task is still active (i.e. the task is done flag is not set yet).
CHANGE(CP#,upmem):
Change the specified CP's active memory block to the up or down block as indicated by upmem.
DEATTACH(CP#):
Release the CP specified from the task which is placing the request. This frees the CP for an attach request from the next task in the sequence.
DISABLE(CP#):

Disable the coprocessor specified. This is the opposite of initialize, in that it removes the coprocessor from the list of available coprocessors.

DUMP(CP#,filename,startAddress,#ofWords,type,tagsize):

Dump the data in the CP specified into the file specified. Start dumping the data from the start address. Type indicates whether the data are in 24-bit or 20-bit format. Tag size indicates the #of words of information which needs to be dumped in addition to the data.

GETMICROCODE(CP#,filename,size,pass):

Load the microcode found in the file with the name filename into the specified CP#. Use size and pass to set those parameters in the microcode before loading. When done during initialization all active CPs are loaded with the microcode and no CP# needs to be specified. However, when requested by a task, the task must first have been attached to CP.

GO(CP#,flags):

Start the microcode running in the coprocessor after setting the coprocessor flags to the code specified. The flags are tested by the microcode and can cause branching to different microcode routines.

GOWAIT(CP#,flags):

Start the microcode running in the coprocessor after setting the coprocessor flags to the code specified. The flags are tested by the microcode and can cause branching to different microcode routines. Wait until the microcode has finished executing before responding to the requesting task.

INITIALIZE(CP device#):

Determine if the device code passed does respond as though it were a coprocessor. If so, initialize the appropriate table for that coprocessor.

LOAD(CP#,filename,startAddress,#ofWords,type,tagsize):

Load the CP specified with data from the file specified. Place the data starting at the start address. Type indicates whether the data are in 24-bit or 20-bit format. Tag size indicates the #of words of information which needs to be loaded in addition to the data.

MOVE(fromCP#,toCP#,fromAddress,toAddress,#ofWords):

Move data from one coprocessor to another.

REGISTERS(CP#,Registers):

Unload the 5 CP registers from the CP specified into the register locations indicated. The CP registers give information about the data on which the microcode was executed.

STOPCP(CP#):

Stop the microcode execution in the CP specified.

In its operation, an executable set of instructions constructed in accordance with the coprocessor pseudo-code as listed above provides an efficient management method for each of the controlling processors 20 and 28 to control its coprocessors. To facilitate the understanding of the operation of this method, it is necessary to review very briefly the functional operation of the program operating in accordance with this pseudo-code.

At the beginning of the pseudo-code are the definitions for two tables to be maintained in controlling processor memory. There is a table for each coprocessor and a table for each set of microcode. The coprocessor table includes flags as to status of the coprocessor, i.e. whether it is in use or not, whether it is executing microcode or not, and if it is executing, the table includes the ID number of the task that the coprocessor is then executing. To facilitate proper sequential performance of the tasks, each task in sequence is assigned a task number so that the controlling processor may assume proper sequence simply by assigning the coprocessor to the task next numbered from that just performed. The coprocessor table also indicates the block of the memory to which the coprocessor is presently assigned. If the coprocessor is executing, there will be an indication of the last command which was executed by the coprocessor and the address of the last microcode block associated with the coprocessor. The coprocessor table can also contain duplicate copies of the coprocessor register set so that the command processor can evaluate the operational status of the coprocessor at any instant.

The microcode table is intended to be associated with each set of microcode to be loaded into the coprocessors in the system. It contains a flag indicating whether or not the microcode has been loaded and also contains an initial value for the set of coprocessor registers to be loaded into the coprocessor before executing the microcode. The size code for the microcode is also indicated, as well·as a pass code associated with it.

The pseudo-code for actual executable program, entitled CPHNDLR is also reprinted above. The program first sets certain flags, such as number of tasks and number of coprocessors to zero, and then begins an initialization routine. The initialization routine is entirely contained within a WHILE . . . DO statement ending with the command ENDWHILE. During that WHILE routine, the program evaluates the

11

option for initializations that are to occur. First the routine verifies that the coprocessors are operational and responding to inquiries, and then initializes the coprocessor table for each coprocessor. Then the program opens the microcode files, loads the set of microcode into the active coprocessors and sets up and initializes the microcode table for each set of microcode. The initialization routine then opens the file programs and sets up the tasks to be sequential tasks for receiving a coprocessor. Finally, the initialization routine checks for error flags. Various error messages are set throughout the initialization routine if proper conditions are not found in the system. At the end of the initialization routine, the coprocessors are all operative, their appropriate coprocessor tables have been set up, and they have been properly loaded with microcode. In addition, the tasks have been prepared for operation.

The next major routine in the program is the command calling for operation of the coprocessors. Again this routine is a WHILE . . . DO statement ending with the instruction ENDWHILE. During this task assignment routine, the first processing that is done is to monitor interrupts. Following the interrupt handling and processing, the program then begins its task assignment routine in which the actual task assignments are accomplished. The actual assignments of task depends on commands given to the program CPHNDLR by the calling task. If the command is READY, then the routine monitors all tasks to make sure that they are ready to operate and then responds to the task. If the command is DONE, indicating that the coprocessor assigned a given task is done, then the task is removed from the queue and the number of tasks is decremented by one. If the command is WAIT the program waits. If the command is an ERROR message, then the error message is transferred to the input output of the system and the task is responded and requeued. If there is an error message indicating no free coprocessors and there is a command indicating a desire to attach a coprocessor to a task, then the request must be stacked pending a coprocessor being available. If an error indicates that there will never be a coprocessor available, then the message needs to be transmitted to the task and the task will not continue. If the coprocessor is busy, and the command requests a DETACH, then the requests must be sent to stack until the coprocessor is available. The system also checks for abort instructions. If the system execution has passed all the error checks and status commands, then the system can respond to a task by attaching the coprocessor and enabling it to operate.

The next portion of the coprocessor pseudo-code is a description of the coprocessor handler commands which are available. The first command is the ATTACH command. This is the command that attaches a coprocessor to an appropriate one of the sequential tasks. Note that the attach command includes as its first parameter a base address. This base address is the address which is loaded into the address register contained in the coprocessor and specifies the memory block at which the coprocessor is initially placed in controlling processor memory space to begin operation. The program CPHNDLR tells the calling routine, i.e. the task, the coprocessor number and the device code for the assigned coprocessor. The coprocessor handler determines which coprocessor to attach by finding available coprocessor which has a task number one less than the task number which is calling the task. If the coprocessor is not available, the coprocessor handler routine will wait until the appropriate coprocessor to be next assigned to this task is available for operation.

The CHANGE command simply allows the active memory block to be changed from up to the down block or vice versa as indicated.

The DEATTACH command is intended to release the coprocessor from the task which is placing the request. This is done when a task is completed and is to free the coprocessor for the next task.

The DISABLE command is simply the opposite of INITIALIZE and moves the coprocessors from a list of available coprocessors.

The DUMP command is use to dump data from a specified location in the coprocessor memory in a specified disk file.

The command GET MICROCODE causes the microcode found in a specific file location to be loaded into the specified coprocessor. The size and pass are determined from the microcode table. When this is done during initialization, all active coprocessors are loaded and no coprocessor needs to be specified. If specific microcode is requested by a task, the task must first have attached to the coprocessor. Using this command calling tasks can load particular microcode into the coprocessor for a particular application.

The command GO starts the microcode running in the coprocessor.

The command GOWAIT starts the microcode running in the coprocessor after setting certain coprocessor flags. The flags are then tested by the microcode. The coprocessor handler waits until the microcode is finished before responding to the requesting task.

The command INITIALIZE determines if the coprocessor responds as though it is a coprocessor. In other words, this is an initialization check.

The command LOAD loads the coprocessor specified with data from a file specified. This is the manner in which initializing data or read data from an operation can be loaded into the memory location of a specified coprocessor.

The command MOVE moves data from one coprocessor to another. This would not be used in normal operation but is available.

The command REGISTERS unloads the coprocessor registers from the coprocessor specified into specific register locations. This allows a task to gain information about the status of the microcode execution in a given coprocessor.

The command STOPCP stops microcode execution in a coprocessor as specified.

Thus it can thus be seen that the coprocessor handler is intended to monitor the status of the coprocessors and to assign or attach coprocessors to specific tasks at given instance of time. The coprocessors are assigned to sequential tasks so that they proceed through the operation of the processees intended to be accomplished by the instrument. The attachment or assignment of any given coprocessor to a task is accomplished by assigning that coprocessor to the address block in memory space which corresponds to the task number's data space. In other words, each coprocessor, for each subsequent task, is assigned a different portion of memory, the assignment being accomplished by loading an address location into the address register in the given coprocessor. In this way, the efficient transition of coprocessor from task to task is most expeditiously accomplished without the need to transfer data from coprocessor to coprocessor.

It is to be understood that the present invention is not limited to the particular embodiment described herein but embraces all such modified forms thereof as come within the scope of the following claims.

## Claims

1. A method of operating in near real time an analytical instrument for receiving and processing sets of analytical data, the instrument including at least one controlling processor with addressable memory and a plurality of coprocessors, each including a microcode processor, coprocessor memory and an address generator through which the controlling processor may address the coprocessor memory, the method comprising the steps of

assigning a coprocessor to a sequential series of tasks including loading data, processing and analyzing data, and outputting data, the assigning being accomplished by the controlling processor loading into the address generator an address value indicating the location in controlling processor memory of the data area for the task to be performed, and

synchronously assigning other coprocessors to the same sequential series of tasks in the same manner so that different coprocessors are simultaneously assigned to sequential tasks on sequential sets of data.

2. A method as claimed in Claim 1 further comprising before the assigning step the step of initializing each coprocessor and loading each coprocessor with microcode so that each coprocessor can perform microcode routines and analysis as called by a task independent of controlling processor.

3. A method as claimed in Claim 1 wherein in the assigning step, each sequential task is assigned a task number and in assigning a coprocessor to a task, the controlling processor assigns the coprocessor to the task with the next sequential task number.

4. A method as claimed in Claim 1 wherein the loading task includes loading analytical data into coprocessor memory.

5. A method as claimed in Claim 4 wherein the tasks of processing and analyzing data are performed on the data in coprocessor memory.

6. A method as claimed in Claim 5 wherein the task of outputting data includes reading the data out of coprocessor memory.

7. A method as claimed in Claim 4 wherein during the task of loading data, the data is loaded into a preselected standard location in memory so that the data is easily addressable by the task.

8. A method as claimed in Claim 1 wherein there are a sufficient number of coprocessors so that each coprocessor in turn may be assigned the task of loading data, the remaining sequence of tasks being performed by that coprocessor on the data before it is the turn of that coprocessor to return to the loading data task.

9. A method as claimed in Claim 1 wherein the addressable memory of the controlling processor is arranged in discrete blocks of standard size, so that tasks may be developed independently of the coprocessors.

10. A method as claimed in Claim 1 wherein the data is the interferogram from an interferometer and the processing and analyzing task includes fast Fourier transformation and statistical analysis.

11. An instrument to process and analyze the output of interferometer comprising

at least one controlling processor including associated addressable memory; and

a plurality of coprocessors connected to operate under the control of the controlling processor, each coprocessor including an address generator connecting the memory of the coprocessor to the address bus of the controlling processor, the address generator connected to receive address information from the controlling processor so that the controlling processor can assign the coprocessor memory to a processing task by loading an address location value into the address generator.

12. An instrument as claimed in Claim 11 wherein each processor includes microcode memory and a microcode processor so that it can execute microcode instructions independent of the controlling processor.

13. An instrument as claimed in Claim 12 wherein each coprocessor also includes a multiplier accumulator connected to the microcode memory so as to be able to perform numerical computations.

14. An instrument as claimed in Claim 11 wherein each coprocessor includes coprocessor memory into which data may be loaded for processing.

15. An instrument as claimed in Claim 11 wherein each coprocessor includes two segments of coprocessor memory either of which may be used for loading or processing data independent of the other segment.

FIG. 1

FIG. 2

EP 0 350 209 A2